Europäisches Patentamt

European Patent Office

Office européen des brevets

(11) Publication number: **0 437 724 A1**

# EUROPEAN PATENT APPLICATION

(21) Application number: 90123596.0

(51) Int. Cl.5: **B41J 2/32**

(22) Date of filing: 07.12.90

(30) Priority: 18.01.90 JP 7094/90

(43) Date of publication of application:
24.07.91 Bulletin 91/30

(84) Designated Contracting States:
AT BE CH DE ES FR GB GR IT LI LU NL SE

(71) Applicant: TONAMI ELECTRIC ENGINEERING
CO., LTD.
22-5 Toyotamakami 1-chome
Nerima-ku, Tokyo 176(JP)

(72) Inventor: Kaneko, Mitsuaki
No. 20-2, Nishiki 1-chome
Nerima-ku, Tokyo(JP)
Inventor: Honda, Tetsuya
No. 16-29, Hon-cho 2-chome
Shiki-shi, Saitama-ken(JP)

(74) Representative: Popp, Eugen, Dr. et al
MEISSNER, BOLTE & PARTNER
Widenmayerstrasse 48 Postfach 86 06 24
W-8000 München 86(DE)

(54) A card printing device.

(57) A card printing device for printing desired char-
acters or symbols on a card (1) comprises means
for pressing a printing surface (13) of a printing head
(9) against a surface of a card (1) by oscillatory
movement of the printing head (9) about an axis
(10). If the printing device is incorporated in a card
reader-writer, said printing head (9) is positioned in a
path (2) along which the card (1) is moved forwardly
and rearwardly within the reader-writer. When the
card passes along the path (2) past the position of
the printing head (9), the printing head (9) is rotated
to press the printing surface (13) of the printing head
(9) against the surface of the card (1) so that the
desired characters or symbols as transmitted to the
printing device from the card reader-writer can be
printed on the card (1).

Fig. I

# A CARD PRINTING DEVICE

The present invention relates to a card printing device for printing characters and symbols on the surface of a card or similar information recording medium for use as a prepaid card, a cash card or an ID card, and a card reader-writer incorporating such a card printing device.

In conventional printing devices of the thermo-sensing or thermo-transferring type, a heat generating printing head is moved in a direction perpendicular to a surface to be printed and oscillated at a desired time to press the surface to be printed between a platen and printing surface for printing.

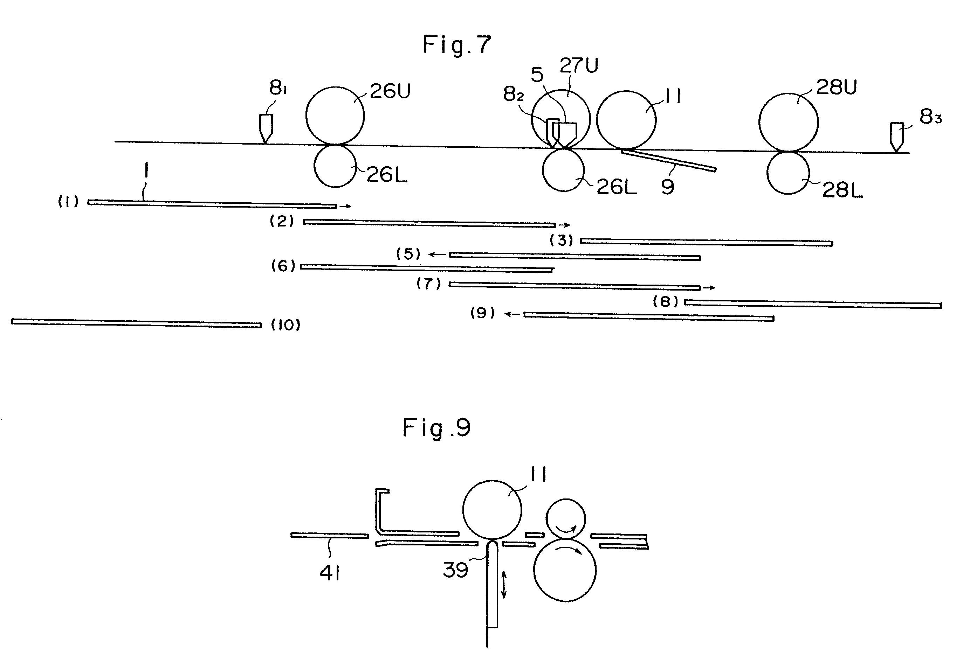

Recently, such printing devices have been incorporated into various other mechanisms. However, in order to miniaturize these mechanisms, the printing device must also be miniaturized. In particular, it is necessary to make the printing device thinner. However, in a conventional printing device, the printing head is located at right angles to the surface to be printed, that is, as shown in Fig. 9, the printing head 39 is oriented along an axis at right angles to the surface of a card 41 to be printed. The mechanism for moving the printing head 39 forwardly and rearwardly towards and away from a platen 11 therefore projects from the lower surface of the printing device preventing the body of the printing device from being made thinner.

It is accordingly an object of the present invention to provide a printing device having a smaller size than conventional devices and, in particular, to provide a flatter and thinner printing device.

According to a first aspect of the present invention there is provided a card printing device comprising a means for moving a card forwardly and rearwardly along a path and a printing means incorporating a printing head for printing characters and symbols on the card, and characterised in that the printing head can oscillate about an axis and has a printing surface located adjacent the path for the forward and rearward movement of the card, and in that a driving means is provided for pressing said printing surface against a surface of the card by oscillation of the printing head about its axis.

According to a second aspect of the present invention there is provided a card reader-writer incorporating a card printing device and comprising a card information reading and writing means arranged along a path along which a card can move forwardly and rearwardly, a means for moving the card along said path, and a means printing means incorporating a printing head for printing characters and symbols on the card, and characterised in that the printing head can oscillate about an axis and has a printing surface located adjacent the path for the forward and rearward movement of the card, and in that a driving means is provided for pressing said printing surface against a surface of the card to be printed by oscillation of the printing head, the driving means being connected to the printing head by a resiliently mounted buffer means.

The invention will now be described by way of example with reference to the accompanying drawings, in which :-

Fig. 1 is a longitudinal sectional view of a card reader-writer of the present invention;

Fig. 2 is a plan view of the card reader-writer of the present invention;

Fig. 3 is a sectional view of a printing mechanism of the present invention;

Fig. 4 is a sectional view along the line A-A in Fig. 3;

Fig. 5 is a front view of a card;

Fig. 6 is a flowchart showing an operational sequence of the card reader-writer of the present invention;

Fig. 7 shows positions occupied by the card at various times during the operational sequence of the card reader-writer of the present invention;

Fig. 8 is a sectional view of another embodiment of printing mechanism according to the present invention; and

Fig. 9 is a longitudinal sectional view of a conventional printing device.

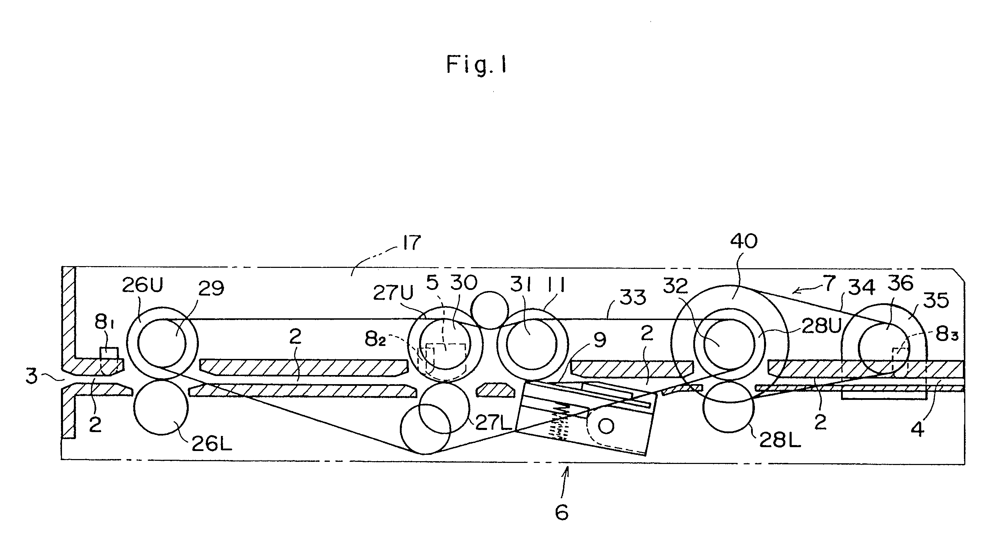

One embodiment of a magnetic card reader-writer according to the present invention will be described with reference to Figs. 1 - 7.

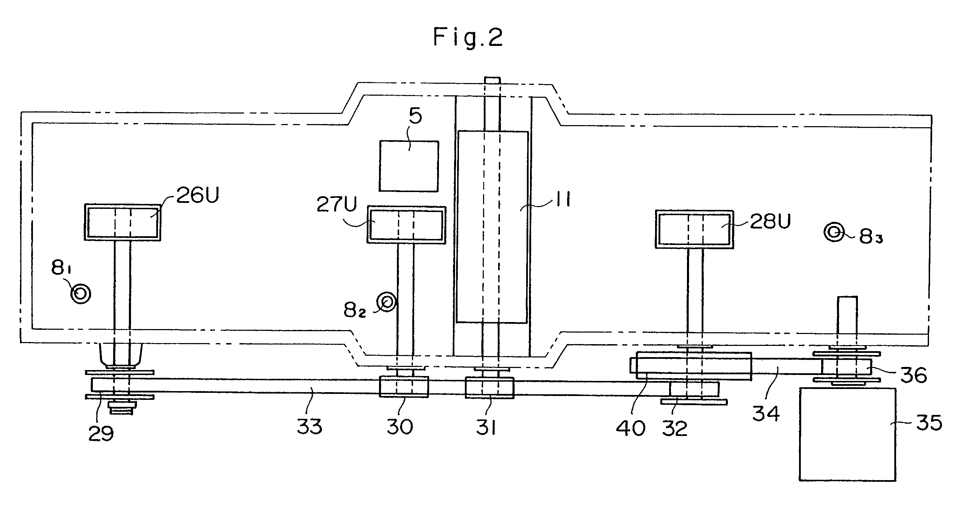

Fig. 1 and Fig. 2 show the whole of the card reader-writer. In the card reader-writer, a path 2 in which a card 1 passes forward and rearward is formed in a straight line from a card insertion opening 3 to an innermost part 4 of the mechanism. A magnetic head 5, a printing mechanism 6, a card moving mechanism 7 and sensors $8_1$, $8_2$ and $8_3$ are exposed from respective openings in appointed positions along the path 2.

As shown in Fig. 1, the magnetic head 5 is placed nearly at the centre of path 2 and exposed so that the surface of the head contacts a magnetic surface portion of the card passing along the path 2. The printing mechanism 6 is located at a more inner part of the path 2 than the magnetic head 5.

A printing head 9 of the mechanism 6 is provided along and substantially parallel to the path 2 and can oscillate freely about an axis 10. On the opposite side of the path 2 to the printing head 9, a platen 11 is provided which serves as a roller to move the card 1 forward and rearward.

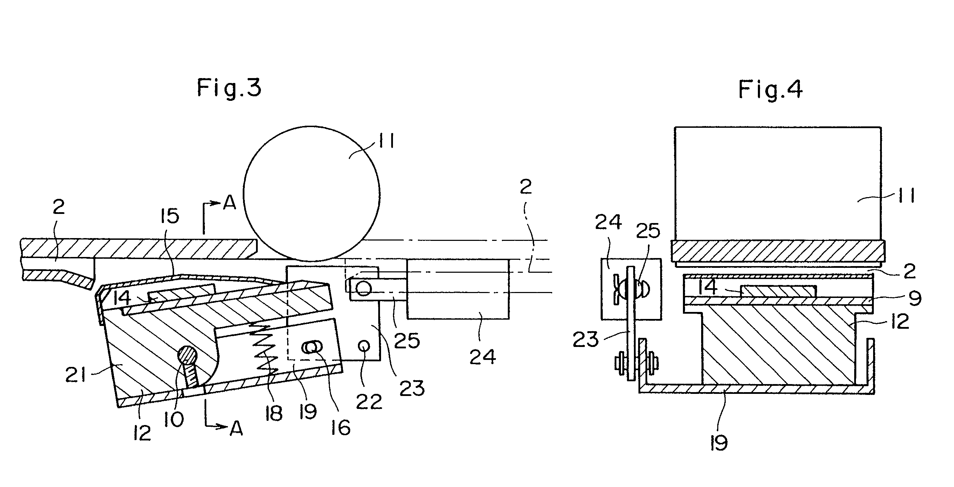

As shown in Fig. 3 a supporting base 12 is provided for the printing head 9, which base 12 is substantially parallel to the path 2 so as to be free to oscillate to the side of the path 2 about the axis 10. The printing head 9 is attached to the base 12 and its upper surface at one end tapers. This tapered surface is a printing surface 13, which accommodates a resistor body for heating. A control element 14 is mounted on the printing head 9 and protected by a cover 15, which also serves as a guiding surface for the card 1.

The angle of taper of the printing surface 13 is approximately 10 degrees. This angle is determined so that when the printing surface 13 makes contact with the platen 11 through the card 1 by oscillation of the supporting base 12, the printing surface 13 is parallel to the path 2.

The printing head 9 is constructed so that, for example, the resistor body for heating forming the printing surface 13 is arranged transversely in a line (180DPI) and has a width of 45mm. The head 9 can print out 27 characters of 7 point with 12 dots in line in a transverse direction.

On the lower surface of the supporting base 12, a buffer plate 19 is resiliently mounted via a spring 18. The buffer plate 19 oscillates with the supporting base 12 about its axis 10. The buffer plate 19 is connected by the spring 18 to the lower side of the printing surface 13 opposite the 11, and also contacts a rear portion 21 of the supporting base 12 to prevent oscillation of the plate 19 against the force of the spring 18 exceeding prescribed value.

The buffer plate 19 is rotatably attached to a link plate 23 about an axis 16. The link plate 23 can itself rotate about an axis 22 and is connected to a plunger 25 of a solenoid 24.

A set of card moving rollers composed of upper rollers 26U, 27U and 28U, and lower rollers 26L, 27L, and 28L are arranged along the path 2 to locate and hold the card 1 between the upper roller and the lower roller at three separate places along the path 2, namely in the vicinity of the insertion opening 3, at the magnetic head 5 and at a position between the magnetic head 5, and the innermost part 4 of the path 2. The upper card moving rollers 26U, 27U and 28U and the platen 11 are driven by through respective pulleys 29, 30, 32 and 31 and a belt 33. The rollers 26U,27U,28U and the platen 11 are synchronised to move the card 1 at the same speed. The lower card moving rollers 26L, 27L and 28L are not driven and rotate via friction according to the rotation of the upper card moving rollers 26U,27U and 28U. The distance between adjacent pairs of card moving rollers is a little shorter than the length of the card 1. For example, the distance is approximately 77mm when the card 1 has a length of 85mm.

A speed reduction pulley 40 is attached to card moving roller 28U and is connected to a driving pulley 36 of a motor 35 through a driving belt 34.

1st, 2nd and 3rd sensors $8_1$, $8_2$ and $8_3$ for detecting the card 1 are provided between the insertion opening 3 and the card moving rollers 26U and 26L, at the front end of the magnetic head 5 and at the innermost part 4, respectively.

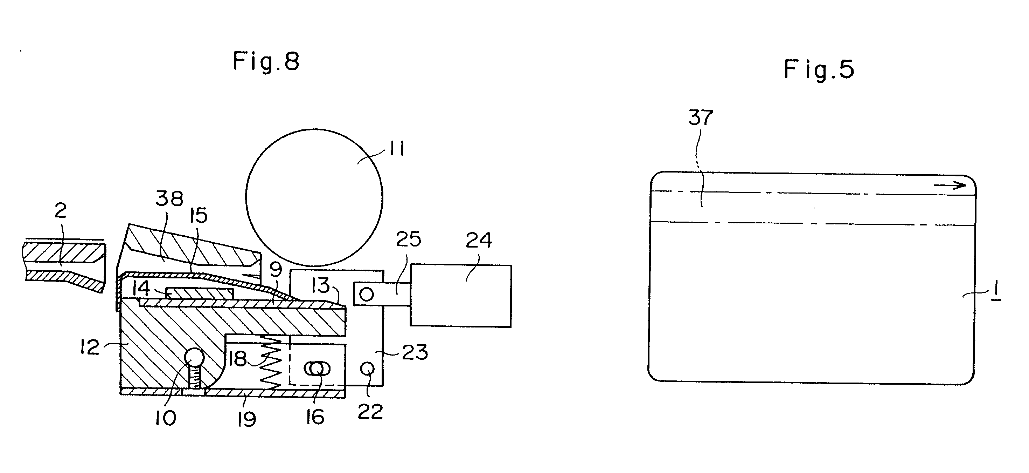

The card 1 in the present embodiment is inserted lengthwise into the insertion opening 3 of the reader-writer with a zonal magnetic data recording area 37, as shown by broken lines in Fig. 5, uppermost to register with the position of the magnetic head 5. In the present invention the magnetic data recording area 37 need not be in a strip, but may be in any form provided that it can register with the magnetic head 5.

On the surface of the card 1, any picture patterns, the name of a publisher, if any, and notices to the user may be printed. The back surface of the card 1 can be printed with various captions, if required, and may be processed by a thermo-sensitive colouring method.

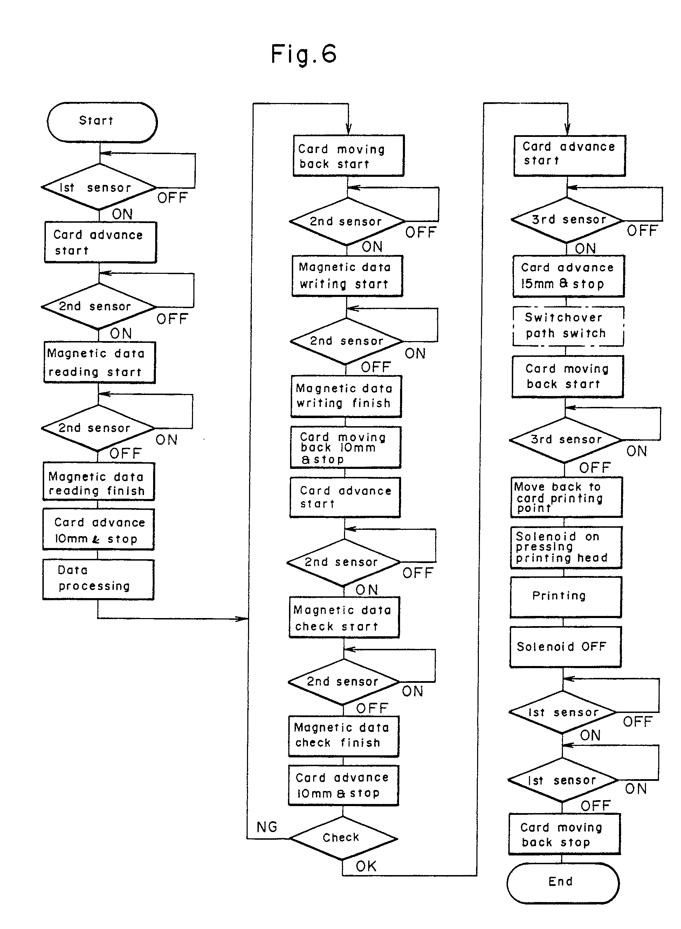

The operation of the card reader-writer will now be described with reference to Fig. 6 and Fig. 7, wherein the numbered positions of the card 1 correspond to the numbered paragraphs below.

In the following description, the direction of insertion of the card 1 into the path 2 via the opening 3 is defined as the forward direction and the direction of retraction of the card 1 is defined as the rearward direction. Further, the direction of rotation of the motor 35 is defined as the normal when the card 1 moves in the forward direction, and reverse when in the rearward direction.

(I) If card 1 is inserted into insertion opening 3 with the back of the card 1, which is thermo-coloured, lowermost then the 1st sensor $8_1$ is triggered, the motor 35 rotates normally and the card 1 is pulled into path 2.

(II) When the front edge of the card 1 reaches the magnetic head 5, the 2nd sensor $8_2$ is triggered. This causes magnetic head 5 to begin to read out data recorded on the data recording area of the card 1. Data reading is continued while the 2nd sensor $8_2$ is switched on.

(III) When card 1 has passed the second sensor $8_2$ completely and it has switched off, the card 1 is advanced by as much as a further 10mm and the motor 35 is stopped.

(IV) Data read out is transferred from the head 5 to an outer processing device (not shown) for data processing, whereas magnetic data to be written to the card 1, if required, is passed back to the head 5 and information to be physically printed on card 1 is passed to the control element 14.

(V) After data processing, the motor 35 operates in a reverse direction to drive the card 1 in a rearward direction. When the second sensor $8_2$ is triggered back on, new data begins to be written in the data recording area 37 of the card 1. Data writing is continued whilst the second sensor $8_2$ is on.

(VI) When the second sensor $8_2$ is turned off after the card 1 has passed it, the card 1 is moved rearwardly by as much as 10mm from the sensor $8_2$. However the motor 35 then begins to rotate in the normal direction advancing the card 1 back along the path 2.

(VII) When the 2nd sensor $8_2$ is again triggered on, the magnetic head 5 begins to read out the new data recorded in the data recording area 37. Data reading is continued while the 2nd sensor $8_2$ is on during which a verification check is performed to see if the data has been properly written in the data recording area 37 of the card 1. If any error is found in the newly written data, the card is advanced by as much as 10mm from the position where it has passed the 2nd sensor $8_2$ thus turning the sensor $8_2$ off and stopping the motor 35. The writing and checking operations are then repeated.

(VIII) If no error is found in the written data, the motor 35 continues its normal rotation to advance the card 1. When the 3rd sensor $8_3$ is triggered on, the card 1 has advanced by as much as 15mm from the position wherein sensor $8_2$ was triggered off and the motor 35 begins to rotate in a reverse direction and card 1 is moved rearwardly.

(IX) The card 1 is moved to a prescribed printing position wherein the 3rd sensor $8_3$ is turned off and the solenoid 24 is magnetically excited. When the solenoid 24 is excited, the plunger 25 is pulled in causing the supporting base 12 to be pushed upwardly via rotational movement of the link plate 23 and the buffer plate 19. The printing surface 13 of the printing head 9 is thus pressed against the back surface of the card 1 by the spring 18.

(X) After printing, the solenoid 24 is deenergised and the plunger 25 retracted removing the printing head 9 from the back surface of the card 1. The motor 35 continues its reverse rotation moving the card 1 rearwardly and causing the card 1 to project by as much as nearly half its length from the insertion opening 3. When the discharged card 1 is pulled out of the opening 3 from the outside, the 1st sensor $8_1$ is turned off stopping the motor 35.

A second embodiment of the present invention will now be described with reference to Fig. 8.

Fig. 8 is a cross sectional view of a printing mechanism 6, wherein a guide plate defining a switchover path 38 in a form of a letter X is provided for the printing head supporting base 12. This path 38 locates in the path 2 and defines a first pathway through which the card 1 can pass during printing and a second pathway through which the card 1 can pass during non-printing.

The reader-writer 6 of the first embodiment described above is not provided with a guide means for the card 1 in the path 2 at the position of the printing mechanism 6. However, In this second embodiment, the cover 15 acts as a guide for upward and downward movement of the card 1.

When a flat card 1 is inserted into the path 2 it is guided along the path 2 by the moving rollers 26U, 27U, 28U, 26L, 27L and 28L so that it can move easily with both forward and rearward movement. However if a bent or curved card 1 is inserted, there is a possibility that the card 1 will be dropping from or caught by the part of the printing mechanism 6. In this embodiment, therefore, a guide plate defining a switchover path 38 in a form of a letter X is provided attached to the printing head supporting base 12. Otherwise, there is no special difference between the operation of the present embodiment and the first embodiment described above.

In the first embodiment, the card 1 is pressed to the printing surface 13 by operation of the solenoid 24 as the card 1 reaches a predetermined position between the platen 11 and the printing head 9. However in this second embodiment it is necessary to locate the card 2 in the path 38 as the edge of the card 1 reaches the point in the path 2 between the platen 11 and the printing head 9. At this point the card 1 is caught in the path 38 and advances along the path 38 to a gap to enable the card 1 to be moved transversely between the platen 11 and the printing head 9.

In embodiments described above, examples of printing the back surface of the card 1 with a thermo-sensitive colour are described. However the present invention is not limited to these. For example, as an alternative a mechanism which is able to drive an ink ribbon may be employed.

In addition, in these embodiments although the magnetic card reader-writer is described as having a magnetic head 5, this is not a requirement of the invention.

In the invention, the printing head is provided with a printing surface which is located at one side of the head and approximately parallel to the forward and rearward moving directions of the card. In use, the printing surface is pressed against the card by rotational movement of the printing head. Therefore, the printing head does not project substantially from the lower surface of the card making the printing device and a card reader-writer in which the printing device is incorporated thinner than similar conventional devices. Furthermore, if a printing device is incorporated into a card reader-writer, the information recorded magnetically on the card can also be printed out providing instant visual verification of the magnetically recorded information.

## Claims

1. A card printing device comprising a means (26,27,28,34,35,36,40) for moving a card (1) forwardly and rearwardly along a path (2) and a printing means (6) incorporating a printing head (9) for printing characters and symbols on the card (1), and characterised in that the printing head (9) can oscillate about an axis (10) and has a printing surface (13) located adjacent the path (2) for the forward and rearward movement of the card (1), and in that a driving means (21,23,24,25) is provided for pressing said printing surface (13) against a surface of the card (1) by oscillation of the printing head (9) about its axis (10).

2. A card printing device as claimed in Claim 1, characterised in that the printing head (9) is connected to the driving means (21,23,24,25) via a resiliently mounted buffer means (19).

3. A card printing device as claimed in Claim 1 or Claim 2, characterised in that the driving means (21,23,24,25) comprises a plunger (25) and a solenoid (24) in which the plunger (25) can move forwardly and rearwardly, and in that the plunger (25) and the printing head (9) are connected together via a link mechanism (22,23).

4. A card printing device as claimed in any one of Claims 1 to 3, characterised in that the printing surface (13) is provided with heat generating printing elements comprising thermoresistors.

5. A card printing device as claimed in any one of Claims 1 to 4, characterised in that the printing head (9) is of a line printer type which has its printing surface (13) provided with printing elements located across the width of the card (1) to be printed.

6. A card reader-writer incorporating a card printing device and comprising a card information reading and writing means (5) arranged along a path (2) along which a card (1) can move forwardly and rearwardly, a means (26,27,28,35,36,40) for moving the card along said path (2), and a means printing means (6) incorporating a printing head (9) for printing characters and symbols on the card (2), and characterised in that the printing head (9) can oscillate about an axis (10) and has a printing surface (13) located adjacent the path (2) for the forward and rearward movement of the card (1), and in that a driving means (21,23,24,25) is provided for pressing said printing surface (13) against a surface of the card (1) to be printed by oscillation of the printing head (9), the driving means (21,23,24,24) being connected to the printing head (9) by a resiliently mounted buffer means.

7. A card reader-writer as claimed in Claim 6, characterised in that a means defining a first pathway (38) for location in the path (2) through which the card (1) passes during printing and a second pathway through which the card (1) can pass during non-printing is provided attached to the printing head (9) so that said means oscillates with the printing head (9).

8. A card reader-writer as claimed in Claim 6 or Claim 7, characterised in that the printing means (6) is arranged to operate after information recorded on the card has been read and processed by the information reading means (5).

Fig. I

# Fig.2

EP 0 437 724 A1

# Fig.3

# Fig.4

Fig.5

Fig.8

# Fig.6

```
        ┌──────────┐
        │  Start   │
        └────┬─────┘
             │
        ╱──────────╲      OFF
       ╱ 1st sensor  ╲──────┐
       ╲             ╱      │
        ╲──────────╱        │
             │ ON           │
        ┌──────────┐        │
        │Card advance│      │
        │  start    │       │
        └────┬─────┘        │
             │              │
        ╱──────────╲   OFF  │
       ╱ 2nd sensor ╲───────┤
       ╲            ╱       │
        ╲──────────╱        │
             │ ON           │
        ┌──────────┐        │
        │Magnetic data│     │
        │reading start│     │
        └────┬─────┘        │
             │              │
        ╱──────────╲   ON   │
       ╱ 2nd sensor ╲───────┤
       ╲            ╱       │
        ╲──────────╱        │
             │ OFF          │
        ┌──────────┐        │
        │Magnetic data│     │
        │reading finish│    │
        └────┬─────┘        │
             │              │
        ┌──────────┐        │
        │Card advance│      │
        │10mm & stop │      │
        └────┬─────┘        │
             │              │
        ┌──────────┐        │
        │  Data    │        │
        │processing │       │
        └────┬─────┘        │
```

```
        ┌──────────────┐
        │ Card moving  │
        │ back start   │
        └──────┬───────┘
               │
          ╱─────────╲    OFF
         ╱ 2nd sensor╲──────┐
         ╲           ╱      │
          ╲─────────╱       │
               │ ON         │
        ┌──────────────┐    │
        │Magnetic data │    │
        │writing start │    │
        └──────┬───────┘    │
               │            │
          ╱─────────╲    ON │
         ╱ 2nd sensor╲──────┤
         ╲           ╱      │
          ╲─────────╱       │
               │ OFF        │
        ┌──────────────┐    │
        │Magnetic data │    │
        │writing finish│    │
        └──────┬───────┘    │
        ┌──────────────┐    │
        │Card moving   │    │
        │back 10mm     │    │
        │& stop        │    │
        └──────┬───────┘    │
        ┌──────────────┐    │
        │Card advance  │    │
        │start         │    │
        └──────┬───────┘    │
               │            │
          ╱─────────╲    OFF│
         ╱ 2nd sensor╲──────┤
         ╲           ╱      │
          ╲─────────╱       │
               │ ON         │
        ┌──────────────┐    │
        │Magnetic data │    │
        │check start   │    │
        └──────┬───────┘    │
               │            │
          ╱─────────╲    ON │
         ╱ 2nd sensor╲──────┤
         ╲           ╱      │
          ╲─────────╱       │
               │ OFF        │
        ┌──────────────┐    │
        │Magnetic data │    │
        │check finish  │    │
        └──────┬───────┘    │
        ┌──────────────┐    │
        │Card advance  │    │
        │10mm & stop   │    │
        └──────┬───────┘    │
               │            │
    NG    ╱─────────╲       │
   ┌──────╱  Check   ╲      │
   │      ╲          ╱      │
   │       ╲────────╱       │
   │           │ OK         │
```

```
        ┌──────────────┐
        │ Card advance │
        │ start        │
        └──────┬───────┘
               │
          ╱─────────╲    OFF
         ╱ 3rd sensor╲──────┐
         ╲           ╱      │
          ╲─────────╱       │
               │ ON         │
        ┌──────────────┐    │
        │Card advance  │    │
        │15mm & stop   │    │
        └──────┬───────┘    │
        ┌──────────────┐    │
        │Switchover    │    │
        │path switch   │    │
        └──────┬───────┘    │
        ┌──────────────┐    │
        │Card moving   │    │
        │back start    │    │
        └──────┬───────┘    │
               │            │
          ╱─────────╲    ON │
         ╱ 3rd sensor╲──────┤
         ╲           ╱      │
          ╲─────────╱       │
               │ OFF        │
        ┌──────────────┐    │
        │Move back to  │    │
        │card printing │    │
        │point         │    │
        └──────┬───────┘    │
        ┌──────────────┐    │
        │Solenoid on   │    │
        │pressing      │    │
        │printing head │    │
        └──────┬───────┘    │
        ┌──────────────┐    │
        │  Printing    │    │
        └──────┬───────┘    │
        ┌──────────────┐    │
        │ Solenoid OFF │    │
        └──────┬───────┘    │
               │            │
          ╱─────────╲    OFF│
         ╱ 1st sensor╲──────┤
         ╲           ╱      │
          ╲─────────╱       │
               │ ON         │
          ╱─────────╲    ON │
         ╱ 1st sensor╲──────┘
         ╲           ╱
          ╲─────────╱
               │ OFF
        ┌──────────────┐
        │Card moving   │
        │back stop     │
        └──────┬───────┘
               │
        ┌──────────────┐
        │     End      │
        └──────────────┘
```

Fig.7

Fig.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 267 580 (KANZAKI PAPER MANUFACTURING COMP. LTD.) * figure 1 * | 1,2,4,6 | B 41 J 2/32 |
| | – – – | | |
| A | EP-A-0 153 859 (K.K. TOSHIBA et al.) * figure 1 * | 1,3,4,6 | |
| | – – – | | |
| A | PATENT ABSTRACTS OF JAPAN vol. 7, no. 92 (M-208)(1237), 16 April 1983; & JP - A - 58016866 (FUJI XEROX K.K.) 31.01.1983 | 1 | |
| | – – – – – | | |

TECHNICAL FIELDS
SEARCHED (Int. Cl.5)

B 41 J

The present search report has been drawn up for all claims

| Place of search | Date of completion of search | Examiner |
|---|---|---|
| Berlin | 12 March 91 | ZOPF K |

CATEGORY OF CITED DOCUMENTS
X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document